# DEMANDE DE BREVET EUROPEEN

(11) **EP 1 247 957 A1**
(43) Date de publication de la demande: **09.10.2002**
(21) Numéro de dépôt: 02290876.8
(22) Date de dépôt: 08.04.2002
(51) Int. Cl.: F02B 31/08

(54) **Dispositif d'admission d'air dans un cylindre de moteur à combustion**

(30) Priorité: 06.04.2001 FR 0104692
(71) Demandeur: Renault s.a.s., 92100 Boulogne Billancourt (FR)
(72) Inventeur: Soltani, Said, 91850 Bouray Sur Guine (FR); Dupont, Alain, 78860 Saint Nom La Breteche (FR)

(57) **Abrégé**

Dispositif d'admission d'air dans un cylindre de moteur à combustion, en particulier de moteur Diesel à injection directe ou de moteur à essence, du type comprenant un conduit seul d'admission reliant la culasse du moteur à la zone d'admission dans le cylindre, obturable par une soupape d'admission, caractérisé par le fait que l'orifice du conduit (1) d'admission débouchant dans le cylindre (3) est disposé de façon que la droite (D1) joignant le centre de l'orifice du conduit au centre du cylindre dans un plan perpendiculaire à l'axe du cylindre (3), fasse un angle compris entre 0° et 60° avec la droite (D3) passant par le centre du cylindre (3) et parallèle à la face en regard de la culasse (7), le conduit étant divisé en deux parties par une paroi interne de séparation (5) et des moyens d'obturation (6) réglables de manière progressive étant montés dans l'une des parties dudit conduit divisé.

## Description

La présente invention est relative à un dispositif d'admission d'air dans un cylindre de moteur à combustion, en particulier pour un moteur Diesel à injection directe.

Dans les moteurs à combustion interne, qu'il s'agisse des moteurs à essence ou plus des moteurs Diesel à injection directe, il est nécessaire, pour assurer un mélange correct entre l'air et le carburant dans le cylindre, d'imprimer à l'air un mouvement de rotation dans la chambre de combustion. Ce mouvement de rotation autour d'un axe parallèle à l'axe du cylindre, est caractérisé par le rapport de la vitesse de rotation de l'air dans le cylindre à la vitesse de rotation du moteur. On appelle "rapport de tourbillonnement" ou plus généralement "swirl", le rapport entre la vitesse de rotation de l'air créée à l'admission et la vitesse de rotation du moteur. Dans un moteur Diesel à injection directe, un tel rapport de tourbillonnement ou swirl, nécessaire au moment de la phase d'injection, est particulièrement souhaité pour le fonctionnement du moteur à faible charge.

On définit en outre la perméabilité dans un cylindre de moteur à combustion, en particulier de moteur Diesel, comme étant le rapport du débit réellement admit par le moteur sur le débit qui aurait été admit dans des conditions idéales, c'est-à-dire sans pertes de charge. La perméabilité dépend donc, non seulement de la différence de pression de part et d'autre de la soupape d'admission, mais également de la qualité aérodynamique de la zone de passage vers le cylindre.

Généralement, une augmentation du swirl est associée à une chute importante de la perméabilité, en raison d'une diminution de la section effective de passage à l'admission.

Lors du dimensionnement d'un moteur Diesel à injection directe, on cherche généralement à optimiser tout d'abord le fonctionnement du moteur à pleine charge. On peut également choisir une valeur de swirl qui représente un compromis sur l'ensemble de la plage de fonctionnement du moteur, avec un ou deux conduits d'admission. Cette valeur de swirl ne correspond cependant pas, dans ce cas, à la valeur optimale qui serait nécessaire pour les fortes charges, ni pour les charges faibles

La demande de brevet japonais JP 11022470 (TOYOTA) décrit un dispositif d'admission pour un moteur à essence comportant deux conduits d'admission par cylindre, l'un des conduits étant équipé d'une paroi le séparant en deux parties. Deux papillons sont prévus, l'un agissant sur la section totale du conduit non divisé, l'autre sur une des deux parties du conduit divisé. Cette structure particulière est utilisée pour une injection optimisée du carburant, lorsque le moteur fonctionne avec un mélange pauvre. Le but de cette disposition est de réduire l'encrassement de la bougie. La disposition des deux conduits d'admission est telle, à l'endroit où ils débouchent dans le cylindre, qu'il n'est pas possible d'obtenir un swirl naturel lorsque les moyens d'obturation sont en position ouverte dans les deux conduits. Le problème de l'établissement d'un swirl n'est d'ailleurs nullement évoqué dans ce document antérieur.

La demande de brevet britannique GB 2311328 (FORD MOTOR) décrit un dispositif d'admission comportant un conduit unique d'admission par cylindre, divisé en deux parties par une cloison interne de séparation. Un clapet d'obturation réglable est disposé à l'entrée de l'une des deux parties du conduit. On obtient ainsi une action sur le swirl en fonction du réglage du clapet d'obturation et selon le point de fonctionnement du moteur. Le but recherché est de permettre une transition douce entre les différents modes de fonctionnement du moteur. Rien n'est indiqué sur la nécessité de maintenir une perméabilité élevée et d'optimiser les valeurs de swirl et de perméabilité, quel que soit le mode de fonctionnement du moteur.

La demande de brevet japonais JP 80 61 072 (FUJI) décrit un dispositif d'admission à deux conduits par cylindre, munis de clapets d'obturation réglables, l'ensemble étant agencé de façon à produire un mouvement de rotation de l'air autour d'un axe parallèle à celui du cylindre (swirl), ainsi qu'un mouvement de rotation de l'air autour d'un axe orthogonal à celui du cylindre (tumble). La manière dont les conduits d'admission débouchent dans le cylindre, est telle qu'il n'est pas possible d'obtenir un swirl naturel lorsque les dispositifs d'obturation sont ouverts aux régimes élevés du moteur.

La présente invention a pour objet un dispositif d'admission d'air dans un cylindre de moteur à combustion qui ne présente pas les inconvénients des dispositifs connus, et qui permette en particulier d'augmenter la valeur du swirl sans entraîner de chute trop importante de la perméabilité, autorisant ainsi l'obtention d'un compromis swirl/perméabilité optimisé pour tous les points de fonctionnement du moteur.

L'invention a également pour objet un tel dispositif d'admission, qui permette d'obtenir naturellement un mouvement de swirl associé à une perméabilité élevée, contribuant à un meilleur remplissage du moteur pour les charges élevées de fonctionnement du moteur.

Le dispositif d'admission d'air dans un cylindre de moteur à combustion selon l'invention est caractérisé en ce qu'il comprend un seul conduit d'admission dont l'orifice débouchant dans le cylindre est disposé de façon que la droite joignant le centre de l'orifice au centre du cylindre dans un plan perpendiculaire à l'axe du cylindre, fasse un angle compris entre 0° et 60° avec la droite passant par le centre du cylindre et parallèle à la face en regard de la culasse.

Grâce à cette structure, on obtient un mouvement de swirl appréciable, même lorsque les moyens d'obturation sont ouverts et une augmentation continue et progressive de ce mouvement de swirl par action sur les moyens d'obturation dans le sens de la fermeture, de façon à adapter le swirl à chaque phase du fonctionnement du moteur.

Dans un mode de réalisation préféré, le conduit est divisé en deux parties par une paroi interne de séparation et des moyens d'obturation réglables de manière progressive sont montés dans l'une des parties du conduit divisé.

La partie de conduit comportant les moyens d'obturation est avantageusement celle qui débouche dans le cylindre à l'endroit le plus éloigné de la paroi cylindrique externe du cylindre.

La paroi interne de séparation s'étend de préférence sur toute la longueur du conduit, depuis l'entrée de la culasse jusqu'à proximité de l'axe de la soupape d'admission bien que l'on puisse également utiliser des parois de séparation plus courtes.

Les moyens d'obturation peuvent comprendre un clapet mobile en translation du type guillotine, un clapet rotatif autour d'un axe perpendiculaire à l'axe du conduit, du type papillon, monté à l'intérieur du conduit ou du type boisseau, monté en partie à l'extérieur du conduit.

De préférence, le conduit débouche sensiblement tangentiellement dans le cylindre.

L'invention trouve son application principale dans les moteurs Diesel à injection directe. Elle peut également être utilisée dans les moteurs à essence.

L'invention sera mieux comprise à l'étude d'un mode de réalisation décrit à titre d'exemple nullement limitatif et illustré par les figures annexées, sur lesquelles :
- la figure 1 est une vue de dessus très schématique d'un cylindre de moteur Diesel à injection directe, montrant également la position des conduits d'admission et leurs moyens d'obturation;
- la figure 2 illustre schématiquement, en vue de côté, un conduit d'admission comportant un moyen d'obturation, selon une première variante; et

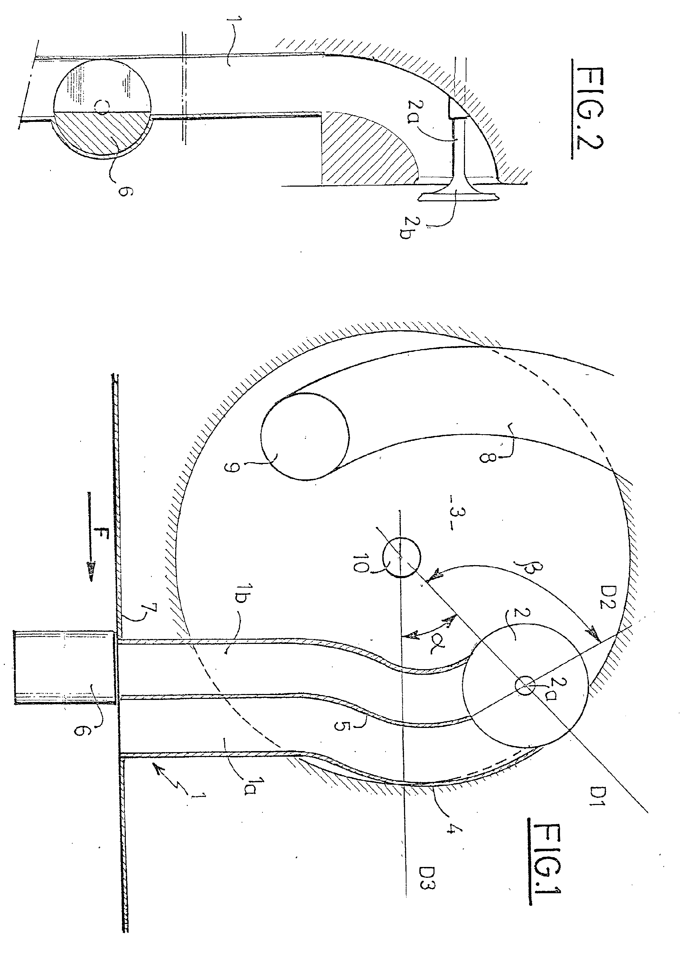

Tel qu'il est illustré sur la figure 1, le dispositif d'admission, adapté à un moteur Diesel à injection directe, comprend pour chaque cylindre 3 un seul conduit d'admission 1 reliant la face supérieure de la chambre de combustion à l'entrée de la culasse 7 par laquelle pénètre l'air selon la flèche F. Le conduit 1 débouche dans le cylindre 3 sur une soupape d'admission 2, qui comporte une tige 2a reliée à la tête de soupape 2b visible sur la figure 2.

Le conduit 1 est placé de façon qu'il débouche dans le cylindre 3 d'une manière particulière. En effet, la droite D1, représentée sur la figure 1, qui joint le centre de l'orifice du conduit d'admission 1 débouchant dans le cylindre 3 et qui joint également le centre du cylindre 3, fait un angle α avec une droite (D3) passant par le centre du cylindre 3 et parallèle à la face en regard de la culasse 7. Dans l'exemple illustré, l'angle α est de l'ordre de 45°. Selon l'invention, il convient de faire en sorte que cet angle α reste compris entre environ 0° et 60°. Le conduit 1 est en outre disposé de façon qu'il débouche dans le cylindre 3 d'une manière sensiblement tangentielle par rapport au cylindre 3, comme on peut le voir sur la figure 1. En d'autres termes, la direction D2 générale de sortie de l'air issu du conduit d'admission 1, est sensiblement tangentielle à la paroi externe du cylindre 3. Dans l'exemple illustré, la direction D2 générale de sortie d'air du conduit d'admission 1 forme un angle β de l'ordre de 90° avec la droite D1 joignant le centre de l'orifice du conduit d'admission 1 et le centre du cylindre 3. Selon l'invention, il convient de faire en sorte que cet angle β reste compris entre 60 et 120°. Grâce à ces dispositions, on obtient un effet de rotation de l'air en swirl important dans le cylindre.

Le conduit 1 est divisé en deux parties par une paroi interne de séparation 5 qui s'étend sur toute la longueur du conduit 1 c'est-à-dire depuis l'orifice d'entrée du conduit en liaison avec l'entrée de la culasse 7 jusqu'à proximité immédiate de l'axe de la soupape d'admission . En variante, on pourrait imaginer une paroi de séparation plus courte, n'allant pas jusqu'à l'axe de la soupape, mais jusqu'à une distance inférieure à 1cm de l'axe 2a de la soupape.

La paroi de séparation 5 divise le conduit d'admission 1 en une première partie extérieure 1a et une deuxième partie intérieure 1b qui débouche plus près de l'axe du cylindre 3 que la partie extérieure la, laquelle débouche plus près de la paroi externe périphérique du cylindre 3.

Des moyens d'obturation, constitués dans l'exemple illustré sur la figure 1 par un clapets 6 mobiles en rotation, du type boisseau, est capables d'obturer l'une des parties du conduit divisés 1.

Le clapet d'obturation 6 est monté de façon à pouvoir obturer la partie intérieure 1b du conduit d'admission 1, ou de l'ouvrir complètement, toute position intermédiaire pouvant en outre être adoptée comme illustré sur la figure 2. Le déplacement en rotation du clapet 6 se fait au moyen d'un axe de commande, qui peut être déplacé en rotation dans un sens et dans l'autre.

Sur la figure 1, se trouve également schématiquement représenté un conduit d'échappement 8 qui coopèrent avec une soupape d'échappement 9. Enfin, on a également représenté schématiquement, en position sensiblement centrale, un injecteur de carburant 10. On comprendra bien entendu que la position de cet injecteur, comme celle du conduit d'échappement 8, puisse être modifiée sans sortir du cadre de la présente invention.

La disposition particulière du conduit d'admission 1, selon l'invention, permet d'obtenir naturellement, lorsque le clapet d'obturation 6 est en position complètement ouverte, un bon remplissage en air du moteur avec un swirl suffisant au fonctionnement en pleine charge, due à l'orientation de la sortie d'air. On obtient de même dans ce cas, un effet de swirl naturel grâce à la disposition particulière de la soupape d'admission 2 et l'inclinaison selon l'angle α comprise entre 0° et 60° de la droite joignant l'axe de la soupape d'admission à l'axe du cylindre par rapport à la droite passant par l'axe du cylindre et parallèle à la face en regard de la culasse 7. Il en résulte en effet une disposition de la soupape d'admission 2 suffisamment excentrée par rapport à l'axe du cylindre 1, permettant d'obtenir un couple de rotation significatif de l'écoulement sortant par l'orifice du conduit 1 débouchant dans le cylindre 1. On obtient ainsi, lorsque les systèmes d'obturation sont ouverts, un swirl naturel, associé à une perméabilité importante. Selon une variante de réalisation, le centre de la soupape est placé sur un rayon du cylindre entre la paroi extérieur du cylindre et le milieu du rayon.

De même, la disposition de la soupape (2) au-delà de l'axe du cylindre par rapport à la culasse 7 permet de créer une réflexion du flux d'air admit et une meilleur utilisation de la composante tangentielle de la vitesse du flux par rapport au fût.

Selon une variante de réalisation, le conduit d'admission 1 présent avant l'arrivée sur la soupape 2, au niveau de la chapelle d'admission, une courbure 4 de rayon déterminée par la valeur de l'angle β. Le tracé du conduit d'admission 1 ainsi obtenu permet d'excentrer le débit d'air vers l'extérieur du conduit et donc de renforcer la composante tangentielle de la vitesse du flux par rapport au fût.

Lorsque le clapet d'obturation 6 est en position d'obturation complète, l'air ne pénètre dans le cylindre 1 que par la partie extérieure 1a en ne conservant que la composante tangentielle de la vitesse du flux par rapport au fût. Cette composante tangentielle assure alors un swirl très fort pour les points de fonctionnement du moteur faiblement chargés.

Dans une position de réglage intermédiaire comme illustré sur la figure 2, il est possible de supprimer progressivement la composante tangentielle de la vitesse du flux par rapport au fût favorable au swirl. La partie 1b intérieure du conduit 1 est celle qui véhiculent l'écoulement d'air qui est le moins favorable à la génération de swirl. Il est ainsi possible d'obtenir, pour chacun des points de fonctionnement du moteur, un compromis optimisé entre le swirl et la perméabilité, en diminuant progressivement les composantes de vitesse de l'air admis qui contribuent le moins au swirl tout en conservant au contraire les composantes de vitesse de l'air admis qui créent le plus de swirl, la partie externe 1a du conduit 1 restant toujours ouverte.

Le mode de réalisation illustré sur la figure 2 montre en variante un moyen d'obturation constitué par un boisseau rotatif 6 monté en partie à l'extérieur du conduit 1 et qui peut être disposé en haut ou en bas du conduit 1.

Bien entendu dans un autre mode de réalisation non représenté, le dispositif d'obturation peut être constitué d'un papillon rotatif autour d'un axé et monté à l'intérieur du conduit 1. De m'ême, le dispositif d'obturation peut être constitué d'une guillotine coulissant perpendiculairement au plan de la paroi de séparation.

Bien que l'invention ait été illustrée par un exemple d'utilisation dans un moteur Diesel à injection directe, on comprendra que l'invention puisse également être utilisée dans un moteur à essence et, d'une manière plus générale, chaque fois qu'il est souhaitable de créer un swirl variable en continu sans pour autant sacrifier la perméabilité.

## Revendications

1. Dispositif d'admission d'air dans un cylindre de moteur à combustion, en particulier de moteur Diesel à injection directe ou de moteur à essence, du type comprenant un conduit seul d'admission reliant la culasse du moteur à la zone d'admission dans le cylindre, obturable par une soupape d'admission, **caractérisé par le fait que** l'orifice du conduit (1) d'admission débouchant dans le cylindre (3) est disposé de façon que la droite (D1) joignant le centre de l'orifice du conduit au centre du cylindre dans un plan perpendiculaire à l'axe du cylindre (3), fasse un angle compris entre 0° et 60° avec la droite (D3) passant par le centre du cylindre (3) et parallèle à la face en regard de la culasse (7), le conduit étant divisé en deux parties par une paroi interne de séparation (5) et des moyens d'obturation (6) réglables de manière progressive étant montés dans l'une des parties dudit conduit divisé.

2. Dispositif selon la revendication 1, **caractérisé par le fait que** l'axe de sortie du conduit fait un angle compris entre 60 et 120° avec la droite joignant le centre de l'orifice au centre du cylindre dans un plan perpendiculaire à l'axe du cylindre (3).

3. Dispositif selon les revendications 1 ou 2, **caractérisé par le fait que** la partie (1b) de conduit comportant les moyens d'obturation est celle qui débouche dans le cylindre (3) à l'endroit le plus éloigné de la paroi cylindrique externe du cylindre.

4. Dispositif selon l'une des revendications 1 à 3, **caractérisé par le fait que** le conduit comprend au voisinage de la chapelle d'admission une courbure de rayon déterminé..

5. Dispositif selon l'une quelconque des revendications précédentes, **caractérisé par le fait que** le centre de la soupape (2) est excentré par rapport à l'axe du cylindre (3) de sorte que le centre de la soupape (2) soit compris entre la paroi extérieur du cylindre (3) et le milieu du rayon du cylindre (3) passant par le centre de la soupape (2).

6. Dispositif selon l'une quelconque des revendications précédentes, **caractérisé par le fait que** la direction (D2) d'arrivée du conduit (1) d'admission dans le cylindre fait une angle compris entre 60 et 120° avec la droite (D1) passant par le centre du cylindre (3) et le centre de l'orifice d'admission (2).

7. Dispositif selon l'une quelconque des revendications précédentes, **caractérisé par le fait que** la paroi interne de séparation (5) s'étend sur toute la longueur du conduit, depuis la culasse (7) jusqu'à proximité de l'axe (2a) de la soupape d'admission.

8. Dispositif selon l'une quelconque des revendications précédentes, **caractérisé par le fait que** les moyens d'obturation comprennent un clapet mobile en translation du type guillotine.

9. Dispositif selon l'une quelconque des revendications 1 à 7, **caractérisé par le fait que** les moyens d'obturation comprennent un clapet rotatif autour d'un axe perpendiculaire à l'axe du conduit, du type papillon , monté à l'intérieur du conduit.

10. Dispositif selon l'une quelconque des revendications 1 à 7, **caractérisé par le fait que** les moyens d'obturation comprennent un clapet rotatif (6) autour d'un axe perpendiculaire à l'axe du conduit, du type boisseau, monté en partie à l'extérieur du conduit, en haut ou en bas du conduit .

11. Dispositif selon l'une quelconque des revendications précédentes, **caractérisé par le fait que** le conduit (1) débouche sensiblement tangentiellement dans le cylindre.
